(19) Europäisches Patentamt

European Patent Office

Office européen des brevets

(11) **EP 1 608 179 A1**

(12) **EUROPEAN PATENT APPLICATION**

(43) Date of publication:
**21.12.2005 Bulletin 2005/51**

(51) Int Cl.⁷: **H04N 7/26**

(21) Application number: **05105130.8**

(22) Date of filing: **10.06.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventor: **Ha, Tae-hyeun Imgwang Apt. 5-409 Gyeonggi-do (KR)** |
| (30) Priority: **16.06.2004 KR 2004044342** | (74) Representative: **Geary, Stuart Lloyd et al Venner Shipley LLP 20 Little Britain London EC1A 7DH (GB)** |
| (71) Applicant: **SAMSUNG ELECTRONICS CO., LTD. Suwon-si, Gyeonggi-Do 442-742 (KR)** | |

(54) **Motion vector determination using plural algorithms**

(57) A method of estimating motion about a plurality of sub-blocks forming a frame, the method including selecting full search blocks of a predetermined number among the plurality of sub-blocks, and regarding the other sub-blocks excluding the full search blocks as fast search blocks; calculating a motion vector of the full search block by full search motion estimation algorithm; calculating a first motion vector of the fast search block by interpolation based on the calculated motion vector of the full search block; and calculating a second motion vector of the fast search block by fast search motion estimation algorithm, using a block position indicated by the first motion vector as a starting position. Thus the present invention provides an apparatus and a method for estimating motion, in which the amount of operation is reduced and matching block is more precisely searched as compared with fast search algorithm.

**Description**

The present invention relates to a video compression method comprising determining motion vectors for blocks in a first frame relative to a second frame and to a video compression apparatus comprising memory means for storing first and second frames and processing means configured for determining motion vectors for blocks in a first frame, stored in the memory means, relative to a second frame, stored in the memory means.

A moving pictures have temporal redundancy, spatial redundancy and code redundancy by their nature, so that the compressibility of a moving picture can be improved by exploiting these redundancies. Generally, motion estimation algorithms are used to eliminate temporal redundancy, a discrete cosine transform (DCT) is used to eliminate spatial redundancy and variable length coding is used to eliminate probability correlation between codes.

A block-matching algorithm is used in most standard moving picture compression methods such as H. 261/262/263, MPEG-1, MPEG-2, MPEG-4, etc. The block-matching algorithm divides the current frame into several blocks (hereinafter, referred to as "reference blocks") and searches a predetermined region (hereinafter, referred to as the "search region") of a prior frame for the most similar block (hereinafter, referred to as the "matching block") to the reference block, and calculating a motion vector relating the position of the reference block with respect to the matching block. Only the motion vector and a pixel value difference between the reference block and the matching block are transmitted.

A sum of squared difference (SSD), a sum of absolute difference (SAD), a mean absolute difference (MAD), a mean square error (MSE), etc. can be used in searching for the block "most similar' to the reference block. Generally, the block-matching algorithm uses the SAD which can be implemented by a simple hardware component without a multiplier. The SAD can be represented by equation (1).

$$SAD(u,v) = \sum_{i=1}^{N} \sum_{j=1}^{M} |R(i,j) - S(i+u, j+v)|, \quad -p \leq u, \quad v < p \qquad (1)$$

where, $N \times M$ indicates the size of the reference block, $R(i,j)$ indicates a pixel positioned at an $i^{th}$ line and a $j^{th}$ row of the reference block, and $S(i,j)$ indicates a pixel positioned at an $i^{th}$ line and an $j^{th}$ row of the search region.

Here, the motion vector is defined by the coordinates (u,v) when SAD(u,v) has a minimum value, that is, by the following equation (2).

$$(u, v) = \min\{SAD(u, v)\} \qquad (2)$$

Further, the block-matching algorithms are classified as full search or fast search algorithms.

A full search algorithm applies a SAD operation to the whole of the search region in order to find the matching block. Full search algorithms have a problem in that the number of operations increases with the size of the moving picture to be compressed and the frame transmission speed.

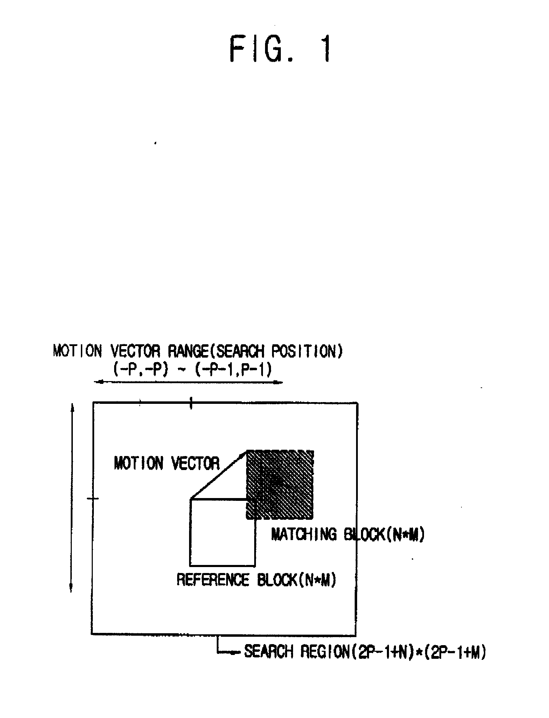

When the allowable motion vector corresponds to the reference block ranges from (-p) to (p-1) in both x- and y-axes as shown in Figure1, the SAD operation is performed $4p^2$ times when applying a full search algorithm to one reference block.

Furthermore, when the number of reference blocks included in one frame is n and the frame transmission speed is f frame/sec, the SAD operation must be performed $4p^2 \times n \times f$ times for each frame. Also, when the reference block comprises $N \times M$ pixels, subtraction, absolute-value operation and addition are performed $4p^2 \times n \times f \times N \times M$ times respectively.

For example, when a full search algorithm is performed under the conditions of a screen comprising $720 \times 480$ pixels, a frame transmission speed of 30 frame/sec, a reference block comprising $16 \times 16$ pixels and a motion vector of a P-picture range from -32 to 31 in both the x- and y-axes, the subtraction, that absolute-value operation and the addition are each performed $4.25 \times 10^{10}$ times.

To complement the full search algorithm, that has to perform the large amount of processing, there has been proposed a fast search algorithm. Fast search algorithms can be classified as selective search algorithms and pixel sub-sampling algorithms.

The selective search algorithm exploits the fact that the number of SAD operations is proportionally increased as the motion vector becomes apart from the matching block. In the selective search algorithm, several search positions are selected with respect to a predetermined starting position, and the SADs of the search positions are calculated. Then, the next search positions are selected with respect to the search positions having the minimum SAD. Such a selective search algorithms includes a three step search (TSS) algorithm, a logarithmic search (LS) algorithm, a conjugate search (CS) algorithm, a diamond search (DS) algorithm, a gradient search (GS) algorithm, etc.

The pixel subsampling block matching algorithm uses some of the pixels included in the reference block for calculating the SADs on the assumption that all pixels are moved by the same distance, and compares the SADs with each other, thereby calculating the motion vector.

The fast search algorithm has an advantage in that the amount of processing is reduced because only some of blocks included in the search region or only some of pixels included in the reference block are compared. However, the foregoing assumption for fast search algorithms is not always realized. That is, in the fast search algorithms, the motion vector is likely to be calculated corresponding to a local minima of the SAD not from the whole search region but from the local search region thereof, so that performance thereof is degraded. If a fast search algorithm is applied to all search positions of the search region, it is hard to get into the local minima. However, even though a fast search algorithm is applied to all search positions of the search region, because only some of the pixels in the reference block are compared with each other, performance thereof is still degraded in the case where the reference block includes a horizontal or vertical linear image.

A video compression method, according to the present invention, is characterised by said motion vectors being determined using a full search algorithm to find a best match block in the second frame for each block in a first subset of the blocks of the first frame and using a fast search algorithm to find matching blocks for each block of a second subset of the blocks of the first frame, the intersection of the first and second subsets being an empty set and the start positions for the fast search algorithm being determined by interpolating between matching blocks that were located using the full search algorithm.

A video compression apparatus, according to the present invention, is characterised in that the processing means is configured to determine said motion vectors using a full search algorithm to find a best match block in the second frame for each block in a first subset of the blocks of the first frame and using a fast search algorithm to find matching blocks for each block of a second subset of the blocks of the first frame, starting at positions determined by interpolating between matching blocks that were located using the full search algorithm, wherein the intersection of the first and second subsets being an empty set.

Preferably, the blocks in the first subset are separated from each other by blocks not in the first subset.

Preferably, the second subset is the difference of the set of all blocks in the first frame from the first subset.

Preferably, said interpolating between matching blocks is performed by interpolating between corresponding motion vectors.

According to the present invention, there is also provided a signal representing computer control codes for controlling a computer to perform a method according to the present invention. A record of such a signal may be provided on a data carrier.

Preferred and optional features of the present invention are set forth in claims 11 to 24 appended hereto.

An embodiment of the present invention will now be described, by way of example, with reference to Figures 2 to 5 of the accompanying drawings, in which:

Figures 1 is a view illustrating a full search algorithm;
Figures 2 is a block diagram of a motion estimation apparatus according to the present invention;
Figures 3 is a flowchart of a motion estimation method according to the present invention;
Figures 4 illustrates the arrangement of sub-blocks forming a first frame and the search region of a second frame; and
Figures 5 is a view illustrating a motion vector field of a full search block according to the full search algorithm, and an estimated motion vector field of a fast search block according to interpolation.

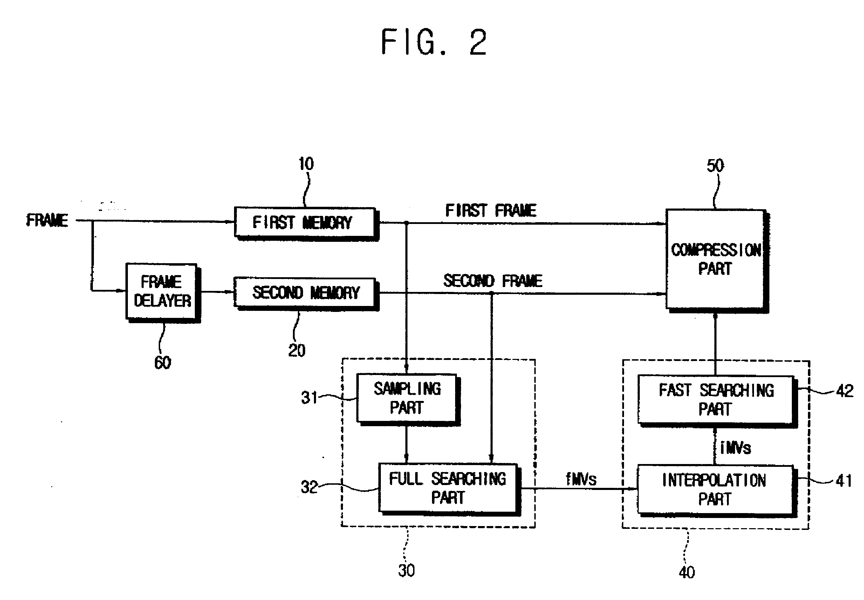

Referring to Figures 2, a motion estimation apparatus comprises a first memory 10, a second memory 20, a precision searching part 30, a rapid searching part 40 and a compression part 50.

The first memory 10 stores the pixel values of a first frame to be compressed and the second memory 20 stores the pixel values of a second frame, offering a search region for the sub-blocks forming the first frame. The second frame precedes the current first frame. Therefore, a frame delay 60 precedes the second memory 20 to delay the second frame by one frame period.

The precision searching part 30 applies a full search motion estimation method (hereinafter, referred to as the "full search algorithm") to a predetermined number of sample blocks (hereinafter, referred to as the "full search blocks") from among the sub-blocks forming the first frame to calculate a motion vectors therefor. Preferably, the full search blocks are spaced apart from each other and arranged at regular intervals.

The precision searching part 30 comprises a sampling part 31 and a full searching part 32.

The sampling part 31 selectively samples a predetermined number of full search blocks from among the sub-blocks forming the first frame in the first memory 1.

The full searching part 32 uses at least one portion of the second frame in the second memory 20 as the search region, calculates motion vectors by applying the full search algorithm to the full search blocks and outputs the calculated motion vectors to the rapid searching part 40.

The rapid searching part 40 applies a fast search motion estimation method (hereinafter, referred to as the "fast search algorithm") to the other sub-blocks (hereinafter, referred to as the "fast search blocks"), i.e. the blocks other than the full search blocks.

The "starting position" of a fast search block, to which the fast search algorithm is applied, is selected to be near to the block position indicated by the motion vector of the full search block adjacent to the corresponding fast search block.

A matching block of the fast search block, adjacent to the full search block in which an optimum motion vector is calculated, is likely to be near to the block position indicated by the motion vector of the full search block. Hence, the optimum matching block is rapidly found when the fast search algorithm is applied to the full search block by employing a block position near to the motion vector of the adjacent full search block as the starting position.

The starting position of the fast search algorithm can by set by applying the displacement between the fast search block and the adjacent full search block to the motion vector of the full search block.

Alternatively, the motion vector of the adjacent fast search block can be estimated by interpolation on the basis of the motion vectors of the full search blocks, thereby setting the motion vector of the starting position. That is, a first motion vector of the fast search block, calculated by interpolation, is estimated on the basis of the matching block, so that the fast search algorithm can be applied by employing the estimated position as the starting position.

For this, the rapid searching part 40 comprises an interpolation part 41 and a fast searching part 42.

The interpolation part 41 applies the interpolation using the motion vector of the full search block, calculated by the precision searching part 30, and estimates the first motion vector based on the matching block of the fast search block. Here, the interpolation may be classified as a nearest neighbour interpolation, a bilinear interpolation, a cubic convolution interpolation, a B-spline interpolation, etc. according to the number of motion vectors of the fast search block.

The fast searching part 42 applies the fast search algorithm using the block position indicated by the first motion vector calculated by the interpolation part 41 as the starting position, thereby calculating a second motion vector.

Alternatively, the "starting position" can be selected as one of the block positions which is located a predetermined distance from the block position indicated by the motion vector of the full search block. Here, the predetermined distance is set in proportion to the distance between the fast search block and the adjacent full search block.

Referring to Figures 2, the compression part 50 detects the difference in pixel values between the reference block and the matching block and transmits the motion vectors of all sub-blocks.

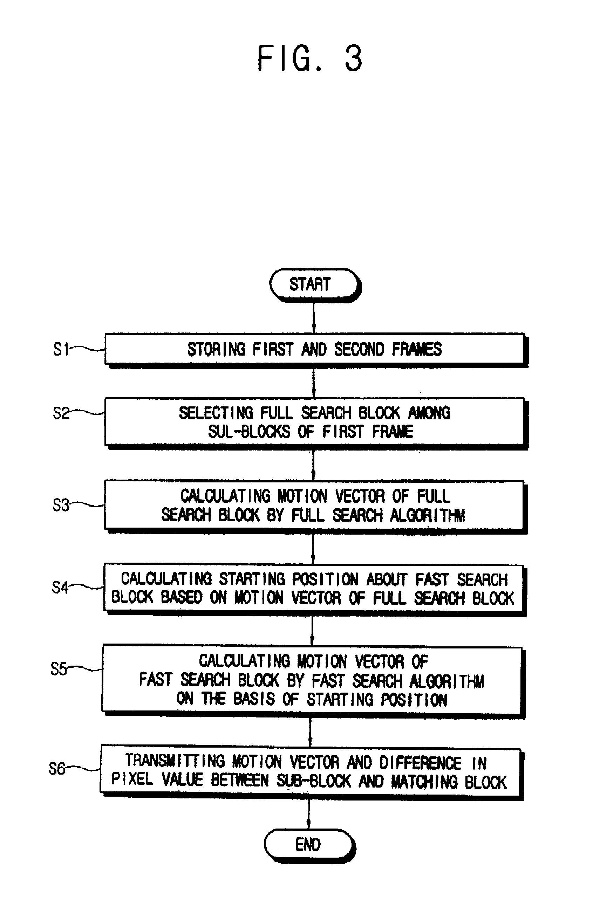

The operation of the motion estimation apparatus of Figures 2 will now be described with reference to Figures 3.

First, when the second frame and the first frame are input in sequence, at operation S1, the first memory 10 stores the first frame and the second memory 20 stores the second frame delayed for the processing time of the first frame.

At operation S2, the sampling part 31 selects a predetermined number of full search blocks from among the plurality of sub-blocks, forming the first frame, and outputs the selected full search blocks to the full searching part 32.

At operation S3, the full searching part 32 calculates the motion vectors, indicating the matching blocks of the full search blocks by applying the full search algorithm to the search region of the second frame from the second memory 20.

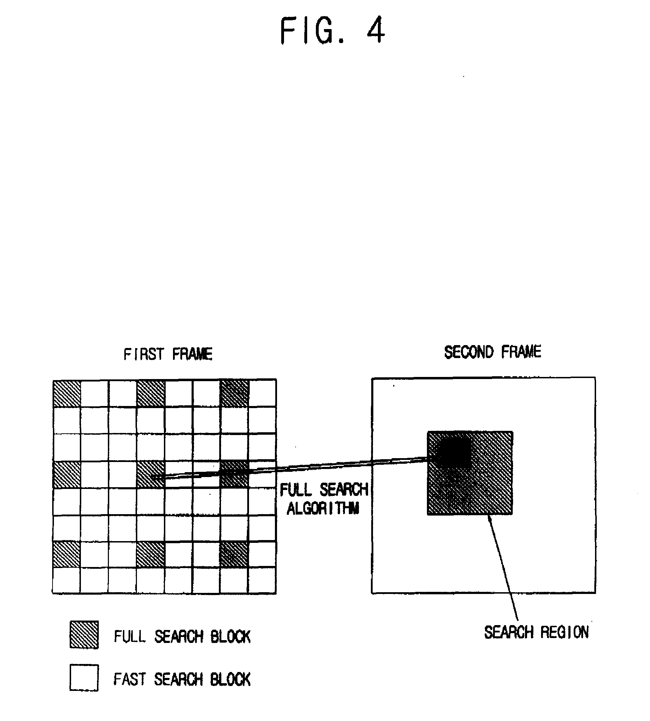

Referring to Figures 4, the full search blocks are selected by the sampling part 31 so as to be arranged at regular intervals. When the number of full search blocks is increased, the number of sub-blocks having the optimum matching block is increased but the amount of processing is increased. Therefore, the number of blocks should be properly determined in consideration of the amount of operation.

The second frame comprises a search region having a predetermined size. The size of the search region can be expanded to include the entire second frame but is preferably limited to a suitable size in consideration of the amount of processing.

At operation S4, the interpolation part 41 estimates/calculates the first motion vector of the fast search block using an interpolation based on the motion vector of a full search block.

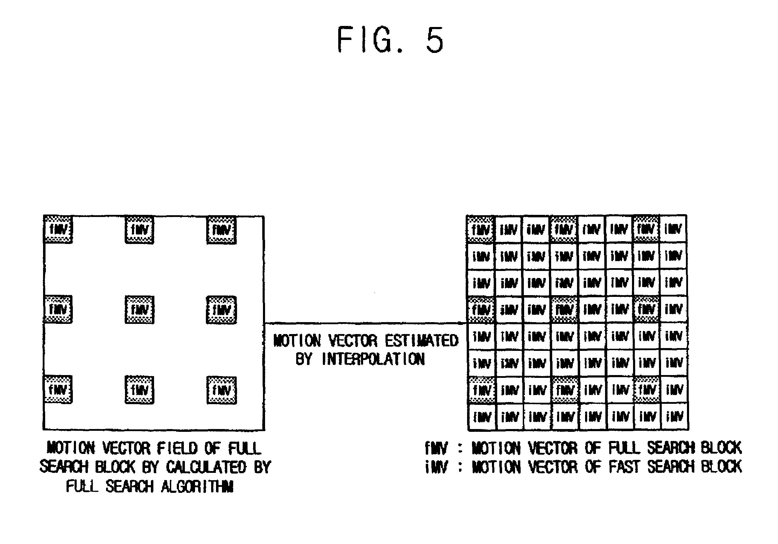

Referring to Figures 5, the full searching part 32 calculates the motion vector fMV of each full search block. Furthermore, the interpolation part 41 estimates the motion vector iMV of the fast search block by employing an interpolation based on the motion vector fMV of the full search block.

At operation S5, the fast search part 42 applies the fast search algorithm to each fast search block by employing the block position indicated by the estimated motion vector of the fast search block as the starting position. Thus, the motion vector of each sub-block of the first frame is completely calculated and is output to the compression part 50.

At operation S6, the compression part 50 detects the difference in the pixel values between the sub-block and the matching block and then outputs it together with the motion vector, thereby completing compression.

Thus, in the foregoing embodiment, the matching blocks are more precisely searched as compared with that of when one fast search algorithm is conventionally used. Therefore, even though the amount of operation can be increased by a little, the amount of operation is sharply decreased as compared with that of when one full search algorithm is conventionally used.

As described above, according to an embodiment of the present invention, the estimation of the matching block is sharply improved in precision with respect to the amount of operation.

**Claims**

1. A video compression method comprising determining motion vectors for blocks in a first frame relative to a second frame, **characterised by** said motion vectors being determined using a full search algorithm to find a best match block in the second frame for each block in a first subset of the blocks of the first frame and using a fast search algorithm to find matching blocks for each block of a second subset of the blocks of the first frame, the intersection of the first and second subsets being an empty set and the start positions for the fast search algorithm being determined by interpolating between matching blocks that were located using the full search algorithm.

2. A method according to claim 1, wherein the blocks in the first subset are separated from each other by blocks not in the first subset.

3. A method according to claim 1 or 2, wherein the second subset is the difference of the set of all blocks in the first frame from the first subset.

4. A method according to claim 1, 2 or 3, wherein said interpolating between matching blocks is performed by interpolating between corresponding motion vectors.

5. A video compression apparatus comprising memory means (10, 20) for storing first and second frames and processing means (40) configured for determining motion vectors for blocks in a first frame, stored in the memory means (10, 20), relative to a second frame, stored in the memory means (10, 20), **characterised in that** the processing means (40) is configured to determine said motion vectors using a full search algorithm to find a best match block in the second frame for each block in a first subset of the blocks of the first frame and using a fast search algorithm to find matching blocks for each block of a second subset of the blocks of the first frame, starting at positions determined by interpolating between matching blocks that were located using the full search algorithm, wherein the intersection of the first and second subsets being an empty set.

6. An apparatus according to claim 5, wherein the blocks in the first subset are separated from each other by blocks not in the first subset.

7. An apparatus according to claim 5 or 6, wherein the second subset is the difference of the set of all blocks in the first frame from the first subset.

8. An apparatus according to claim 5, 6 or 7, wherein processing means is configured to perform said interpolating between matching blocks by interpolating between corresponding motion vectors.

9. A signal representing computer control codes for controlling a computer to perform a method according to any one of claims 1 to 4.

10. A data carrier carrying a record of a signal according to claim 9.

11. A method of estimating motion of a plurality of sub-blocks forming a frame, the method comprising:

   selecting a predetermined number of the plurality of sub-blocks as a full search blocks, and selecting other sub-blocks of the plurality of sub-blocks, excluding the sub-blocks of the full search blocks as fast search blocks;
   calculating a motion vector of a full search block by performing full search motion estimation algorithm;
   calculating a first motion vector of a fast search block by interpolation based on the calculated motion vector of the full search block; and
calculating a second motion vector of the fast search block by performing a fast search motion estimation algorithm, using a block position indicated by the first motion vector as a starting position.

**12.** The method according to claim 11, wherein the full search blocks are selected to be non-adjacent to each other.

**13.** A method of estimating motion of a plurality of sub-blocks forming a frame, the method comprising:

applying a full search motion estimation algorithm to a predetermined number of sample blocks selected among the plurality of sub-blocks, and calculating a motion vector of each sample block; and
applying a fast search motion estimation algorithm to other sub-blocks of the plurality of sub-blocks excluding the sample blocks, and calculating a motion vector of each other sub-block on the basis of a starting position being located at a predetermined distance from a block position indicated by the motion vector of an adjacent sample block.

**14.** The method according to claim 13, wherein the predetermined distance is in proportion to a distance between the sub-block to which the fast search motion estimation algorithm is applied and the adjacent sample block.

**15.** The method according to claim 13, wherein the starting position includes the block position indicated by the motion vector of the other sub-block, calculated by interpolation based on the motion vector of the sample block.

**16.** The method according to claim 13, wherein the sample blocks are selected to be apart from each other by a predetermined distance.

**17.** A method of estimating motion of a plurality of sub-blocks forming a frame, the method comprising:

applying a full search motion estimation algorithm to a predetermined number of sample blocks selected among the plurality of sub-blocks, and calculating a motion vector of each sample block;
calculating a first motion vector of each of the other sub-blocks of the plurality of sub-blocks excluding the sample blocks by interpolation based on the motion vectors of the sample blocks; and
applying a fast search motion estimation algorithm to the other sub-blocks excluding the sample blocks, and calculating a second motion vector of each of the other sub-blocks excluding the sample blocks on the basis of a block position indicated by the first motion vector.

**18.** An apparatus comprising:

a first memory which stores a first frame and a second memory which stores a second frame;
a sampling part which selects a predetermined number of sub-blocks of the first frame as sample blocks;
a full searching part which calculates a motion vector of each sample block selected by the sampling part by applying a full search motion estimation algorithm to the sample blocks, regarding the second frame as a search region;
an interpolation part which calculates a first motion vector of each of the other sub-blocks of the plurality of sub-blocks excluding the sample blocks by interpolation based on the motion vector of the sample blocks; and
a fast searching part which calculates a second motion vector of each of the other sub-blocks excluding the sample blocks by applying a fast search motion estimation algorithm to each of the sub-blocks excluding the sample blocks on the basis of a block position in the second frame indicated by the first motion vector.

**19.** An apparatus comprising:

a first memory which stores a first frame and a second memory which stores a second frame;
a precision searching part which applies a full search motion estimation algorithm to a predetermined number of sample blocks of sub-blocks of the first frame by regarding the second frame as a search region, and calculates a motion vector of each of the sample blocks; and
a rapid searching part which applies a fast search motion estimation algorithm to each of the other sub-blocks of the plurality of sub-blocks excluding the sample blocks on the basis of a starting position located a predetermined distance from a block position indicated by the motion vector of an adjacent sample block, and calculating a motion vector of each of the other sub-blocks excluding the sample blocks.

**20.** The apparatus according to claim 19, wherein the starting position is selected on the basis of displacement between the sub-block to which the fast search motion estimation algorithm is applied and the adjacent sample block.

**21.** The apparatus according to claim 19, wherein the rapid searching part comprises an interpolation part to calculate an estimation motion vector of each of the other sub-blocks excluding the sample blocks by interpolation based on the motion vector of the sample blocks, and to use a block position indicated by the estimation motion vector as a starting position.

**22.** The apparatus according to claim 19, wherein the sample blocks are selected to be a predetermined distance apart from each other.

**23.** The apparatus according to claim 18, further comprising a frame delayer which delays the first frame to be stored as the second frame in the second memory.

**24.** The apparatus according to claim 19 further comprising a frame delayer which delays the first frame to be stored as the second frame in the second memory.

# FIG. 1

MOTION VECTOR RANGE(SEARCH POSITION)
(-P,-P) ~ (-P-1,P-1)

MOTION VECTOR

MATCHING BLOCK(N*M)

REFERENCE BLOCK(N*M)

SEARCH REGION(2P-1+N)*(2P-1+M)

EP 1 608 179 A1

FIG. 2

9

# FIG. 3

START

S1 — STORING FIRST AND SECOND FRAMES

S2 — SELECTING FULL SEARCH BLOCK AMONG SUL-BLOCKS OF FIRST FRAME

S3 — CALCULATING MOTION VECTOR OF FULL SEARCH BLOCK BY FULL SEARCH ALGORITHM

S4 — CALCULATING STARTING POSITION ABOUT FAST SEARCH BLOCK BASED ON MOTION VECTOR OF FULL SEARCH BLOCK

S5 — CALCULATING MOTION VECTOR OF FAST SEARCH BLOCK BY FAST SEARCH ALGORITHM ON THE BASIS OF STARTING POSITION

S6 — TRANSMITTING MOTION VECTOR AND DIFFERENCE IN PIXEL VALUE BETWEEN SUB-BLOCK AND MATCHING BLOCK

END

# FIG. 4

FIRST FRAME

SECOND FRAME

FULL SEARCH
ALGORITHM

SEARCH REGION

FULL SEARCH BLOCK

FAST SEARCH BLOCK

# FIG. 5

MOTION VECTOR ESTIMATED
BY INTERPOLATION

MOTION VECTOR FIELD OF FULL
SEARCH BLOCK BY CALCULATED BY
FULL SEARCH ALGORITHM

fMV : MOTION VECTOR OF FULL SEARCH BLOCK
iMV : MOTION VECTOR OF FAST SEARCH BLOCK

EP 1 608 179 A1

**European Patent Office**

## EUROPEAN SEARCH REPORT

Application Number

EP 05 10 5130

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 398 068 A (LIU ET AL) 14 March 1995 (1995-03-14) * column 5 - column 11; claims 1-12 * | 1-24 | H04N7/26 |
| X | US 5 210 605 A (ZACCARIN ET AL) 11 May 1993 (1993-05-11) * column 5 - column 11; figures 3-12 * | 1-24 | |
| X | LIU B., ZACCARIN A.: "New fast algorithms for the estimation of block motion vectors" IEEE TRANSACTIONS ON CIRCUITS AND SYSTEMS FOR VIDEO TECHNOLOGY, [Online] vol. 3, no. 2, 1 April 1997 (1997-04-01), pages 148-157, XP002346536 Retrieved from the Internet: URL:http://ieeexplore.ieee.org/iel4/76/5557/00212720.pdf?tp=&arnumber=212720&isnumber=5557> [retrieved on 2005-09-26] * page 148 - page 152 * | 1-24 | |
| A | FULVIO MOSCHETTI: "A Statistical Aprroach to Motion Estimation"[Online] 31 January 2001 (2001-01-31), XP002346537 Lausanne, EPFL Retrieved from the Internet: URL:http://lts1pc19.epfl.ch/repository/Moschetti2001_648.pdf> [retrieved on 2005-09-26] * pages 18-31 * * pages 63-71 * | 1-24 | **TECHNICAL FIELDS SEARCHED (Int.Cl.7)** H04N |

The present search report has been drawn up for all claims

| Place of search | Date of completion of the search | Examiner |
|---|---|---|
| Munich | 27 September 2005 | Moschetti, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 10 5130

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2005

| Patent document cited in search report | | Publication date | Patent family member(s) | Publication date |
|---|---|---|---|---|
| US 5398068 | A | 14-03-1995 | NONE | |
| US 5210605 | A | 11-05-1993 | NONE | |

EPO FORM P0459

For more details about this annex : see Official Journal of the European Patent Office, No. 12/82